## Europäisches Patentamt
## European Patent Office
## Office européen des brevets

(19)

(11) Numéro de publication: **0 004 209**
**B1**

(12) **FASCICULE DE BREVET EUROPEEN**

(45) Date de publication du fascicule de brevet: **23.09.81**

(51) Int. Cl.³: **F 01 D 17/14, F 16 K 39/02**

(21) Numéro de dépôt: **79400032.3**

(22) Date de dépôt: **16.01.79**

(54) Soupape d'admission de vapeur.

(30) Priorité: **02.03.78 FR 7805977**

(43) Date de publication de la demande:
**19.09.79 Bulletin 79/19**

(45) Mention de la délivrance du brevet:
**23.09.81 Bulletin 81/38**

(84) Etats Contractants Désignés:
**CH DE GB IT**

(56) Documents cités:
**FR - A - 1 341 638**
**GB - A - 1 470 061**

(73) Titulaire: **CREUSOT-LOIRE**
**42 rue d'Anjou**
**F-75008 Paris (FR)**

(72) Inventeur: **Bouvot, Henri**
**14 rue Pépinière**
**F-71200 Le Creusot (FR)**

(74) Mandataire: **Dupuy, Louis et al,**
**CREUSOT-LOIRE 15 rue Pasquier**
**F-75383 Paris Cedex 8 (FR)**

Courier Press, Leamington Spa, England.

Soupape d'admission de vapeur

La présente invention se rapporte à une soupape d'admission de vapeur d'un type amélioré, destinée à être utilisée dans une turbine à vapeur.

On connait des soupapes comportant une entrée unique composée d'un siège et d'un clapet, ledit clapet pouvant être, tel que décrit dans le brevet français N° 1.341.638, de type dit "équilibré", c'est-à-dire composé d'un piston et d'un clapet-pilote permettant, par la création d'un débit de fuite, une réduction notable de l'effort de femeture. Le clapet unique, de type équilibré ou non, étant soulevé, la vapeur pénètre entre celui-ci et son siège, ce dernier étant généralement suivi d'une tuyère divergente.

La levée plus ou moins grande du clapet permet de règler le débit de vapeur dans la turbine. Il est bien connu qu'avec ces soupapes classiques, des perturbations prennent naissance dans la tuyère pour les faibles levées correspondant aux marches à faible puissance de la turbine, ces perturbations étant sources de bruit dont le niveau d'intensité sonore exerce une influence perturbatrice pouvant amener l'ensemble du circuit à des conditions de résonance. On comprend donc aisément qu'un niveau d'intensité sonore modéré soit recherché, aussi bien pour la protection de l'oreille humaine que pour la tenue à long terme des matériaux.

On connait également des soupapes composites, telles que par exemple décrites dans le brevet britannique N° 1.470.061, munies de deux entrées, dont une première entrée destinée aux faibles débits de vapeur correspondant aux marches à faible puissance, et une seconde entrée de plus grandes dimensions, destinée aux débits supérieurs, la vapeur passant alors pour de tels débits par les deux entrées. De telles soupapes comportent une tige de soupape munie d'un premier clapet de dimensions réduites et coopérant avec un siège faisant partie d'une pièce coulissante possédant une portion amont de section rétrécie permettant le soulèvement de ladite pièce par ledit premier clapet après une course de levage déterminée de celui-ci. La partie aval de la pièce coulissante forme le clapet de la seconde entrée de plus grandes dimensions de la soupape.

Dans de telles soupapes composites, les perturbations d'écoulement dans la tuyère, et par suite le bruit et les vibrations qui en découlent, restent néanmoins non négligeables car d'une part les deux entrées sont ouvertes en même temps pour les débits élevés, et d'autre part la portion de tuyère divergente et la tuyère divergente faisant suite respectivement à la première et la seconde entrée sont dans de telles soupapes des parois non contigües, de sorte que l'écoulement s'en trouve perturbé. Par ailleurs, la construction de ces soupapes composites de type connu n'est conçue que pour deux entrées, ce qui en réduit l'efficacité recherchée.

La soupape de l'invention est une soupape composite de conception telle qu'elle permettre le fonctionnement pour les différents régimes de la turbine, dans des conditions optimales du point de vue de la stabilité de l'écoulement et permettant donc, de manière beaucoup plus efficace qu'avec les soupapes de l'art antérieur, d'éviter la naissance de perturbations d'écoulement dans la tuyère pouvant éviter des bruits et des vibrations.

Par ailleurs, la soupape de l'invention a l'avantage de toujours présenter une levée importante, ce qui est particulièrement avantageux au niveau de la régulation. Enfin, la soupape de l'invention, de par sa construction même, se trouve d'elle-même munie d'un tranquilliseur, ce qui permet encore mieux d'améliorer l'homogénéisation du débit de vapeur dans la tuyère, donc encore mieux de se prémunir contre l'émission de bruits et les vibrations.

La soupape composite d'admission conforme à l'invention est du type comportant plusieurs soupapes successives coaxiales actionnées par le soulèvement d'une tige de soupape, la surface d'admission de vapeur étant croissante d'une soupape à la suivante dans le sens de la levée de la tige de soupape, la première soupape, assurant une première entrée de vapeur, étant constituée par un premier clapet porté par la tige et par un premier siège d'une pièce coulissante disposée dans une portion cylindrique pourvue d'orifices latéraux de passage de la vapeur, la pièce coulissante comportant une section amont rétrécie permettant son soulèvement par le clapet, la partie aval de la pièce coulissante formant clapet d'une seconde soupape assurant une second entrée de vapeur, les entrées s'ouvrant l'une après l'autre de l'amont vers l'aval au fur et à mesure de la levée de la tige de soupape, et elle est caractérisée en ce que ladite soupape peut comporter plus de deux entrées de vapeur, plusieurs pièces coulissantes étant montées télescopiquement l'une sur l'autre dans la portion cylindrique, celle-ci étant percée d'orifices disposés respectivement à hauteur de chacune des entrées de manière telle que les orifices soient obturés successivement, d'amont en aval, par lesdites pièces coulissantes en concordance avec l'ouverture de l'entrée suivante au fur et à mesure de la levée de la tige de soupape.

L'invention sera mieux comprise à l'aide de la description suivante d'un exemple de réalisation, en référence aux dessins annexés dans lesquels:

— la figure 1 représente une soupape selon l'invention en position de fermeture totale,

— la figure 2 représente la soupape de la figure 1 dans sa position de première ouverture, correspondant à un faible débit de vapeur,

— la figure 3 représente la soupape dans sa position de seconde ouverture, correspondant à un débit de vapeur d'intensité moyenne,

— la figure 4 représente la soupape dans sa position de dernière ouverture, correspondant à un fort débit.

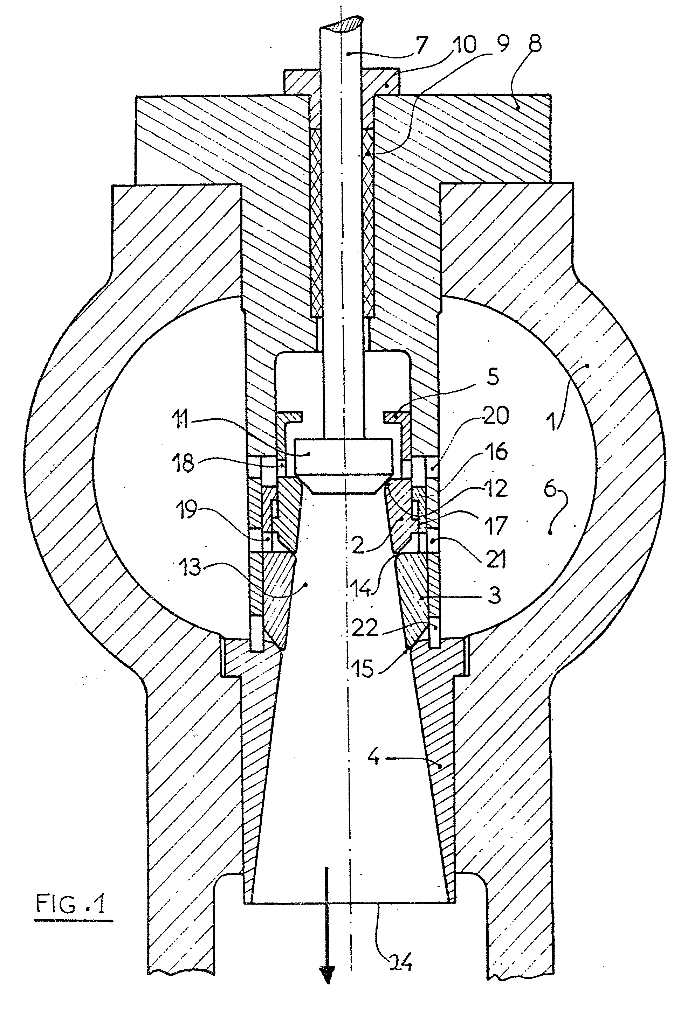

Sur la figure 1, la référence 1 désigne le corps de la boîte à soupapes délimitant un espace 6 dans lequel est envoyée la vapeur en direction de la turbine. La référence 7 désigne la tige de soupape, reliée et actionnée par le dispositif de régulation de la machine. De manière connue en soi, la tige 7 est montée coulissante dans un couvercle de soupape 8 encastré dans le corps 1, par l'intermédiaire d'une garniture d'étanchéité 9 et d'un presse-étoupe 10.

A l'extrémité de la tige 7 se trouve un clapet 11 semblable aux clapets équipant le soupapes classiques, mais de dimensions réduites. Dans la position de fermeture totale représentée sur le dessin, le clapet 11, reposant sur son siège 12, vient obstruer la partie amont d'une tuyère divergente 13 possédant, de manière classique, une sortie aval 24 de vapeur.

Conformément à l'invention, la soupape de la figure 1 est en réalité une soupape composite comportant en outre une pluralité d'entrées de vapeur (14, 15) réparties en alignement le long de la tuyère divergente 13, et formées par plusieurs pièces coulissantes successives 2, 3 et un siège 4, la partie aval des pièces coulissantes 2 et 3 formant chacune un clapet venant s'appuyer sur le siège suivant, respectivement la partie amont de la pièce coulissante 3 formant siège et le siège 4. La partie amont de la pièce 2 constitue un siège 12 pour le clapet 11, les sections intèrieures des pièces coulissantes 2 et 3 forment chacune une des parties continues de la tuyère divergente 13.

Les clapets successifs 11, partie aval des pièces coulissantes 2, 3 de la soupape composite de l'invention sont montés, à l'intérieur d'une enceinte tubulaire constituée par la partie aval du couvecle 8, de manière télescopique, la levée des pièces coulissantes 2 et 3 étant commandée par la levée de la tige de soupape 7. Pour ceci, les pièces coulissantes 2 et 3 sont chacune munies, à leur partie amont, d'une collerette (5 et 16 respectivement). La collerette 5 est telle qu'elle puisse être soulevée par le clapet 11, et la collerette 16 est telle qu'elle puisse être soulevée par la pièce coulissante 2, à l'aide d'un épaulement 17 situé à la partie aval externe de celui-ci.

Le siège 2 est percé, à hauteur de la première entrée de vapeur (11 12), d'orifices 18 permettant le passage de la vapeur. De la même façon la pièce coulissante 3 est percée d'orifices 19 situés à hauteur de la deuxième entrée 14. Afin de permettre le passage de la vapeur se trouvant dans l'espace 6 vers la soupape de l'invention, ainsi que de jouer le rôle de tranquilliseur, la portion cylindrique aval du couvercle 8, dont le rôle principal est de maintenir l'ensemble télescopique, est également percée de trous 20, 21, 22 ouvrant respectivement l'accès aux différentes entrées (11 12), 14 et 15.

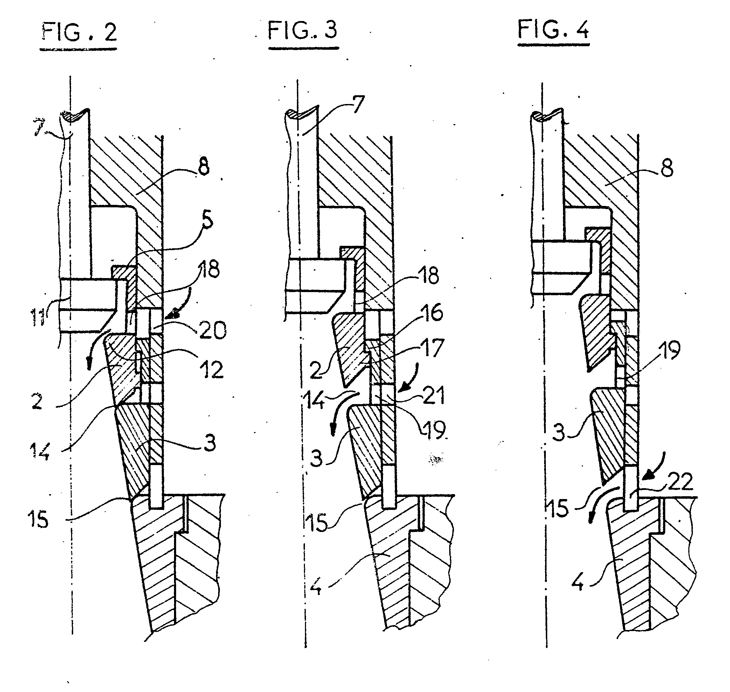

Le fonctionnement de la soupape composite de l'invention sera maintenant explicité à l'aide des figures 2, 3 et 4.

Lorsque, en partant de la position de fermeture totale représentée sur la figure 1, on commence à lever la tige de soupape 7, on ouvre la première entrée (11, 12) par levée du petit clapet 11, de sorte que la vapeur peut pénétrer dans la tuyère par les orifices 20 et 18, ainsi que par l'intervalle compris entre ledit clapet 11 et son siège 12. En raison de la faible valuer du diamètre du siège 12, il est nécessaire, pour ce faible débit de vapeur, d'avoir une levée relativement importante du clapet 11, ce que, comme on l'a dit précédemment, est avantageux pour la régulation, d'autre part on n'aura pas de fort laminage de la vapeur et, celle-ci débouchant par ailleurs dans un orifice de tuyère de dimensions bien adaptées au débit, pas ou peu d'émission de bruit. Par ailleurs, les orifices 20 percés dans le couvercle (8) forment un tranquillisour classique, ce qui contribue encore mieux à la suppression du bruit. Sur la figure 2, on a représenté par des flèches le trajet de la vapeur, la première entrée étant en position d'ouverture maximale.

Si maintenant, en partant de la poition de la figure 2, on continue à lever la tige 7, le clapet 11 tire vers le haut, par la collerette 5, la pièce coulissante 2, de sorte que les orifices 18 se referment progressivement, alors que s'ouvre la seconde entrée 14, de circonférence supérieure, donc permettant de passer un débit de vapeur plus élevé.

Sur la figure 3, la première entrée est figurée totalement close, alors que la seconde entrée est ouverte au maximum, les flèches montrant le trajet de la vapeur à travers les orifices 21, 19 et l'ouverture 14. Pour cette position, correspondant à des débits moyens, on constate que l'on a encore une levée importante de la soupape intemédiaire constituée par les pièces coulissantes (2, 3), une ouverture d'entrée dans la tuyère de dimensions bien adaptées au débit, et par surcroit la présence d'un tranquilliseur (19, 21) entourant l'entrée 14 de cette soupape intermédiaire.

En levant encore la tige 7, la pièce coulissante 2 vient tirer vers le haut, à l'aide de l'épaulement 17 et de la collerette 16, la pièce coulissante 3, de sorte que les orifices 19 se refement progressivement alors que s'ouvre la troisième entrée 15 adaptée, de par sa circonférence supérieure, à passer les plus forts débits. Pour la position représentée sur la figure 4, les orifices 19 sont totalement obstrués, et toute la vapeur passe, comme indiqué par les flèches, par la dernière entrée 15, au travers des orifices 22 percés dans l'enceinte formée par la partie aval du couvercle 8, et que l'on a avantageusement fait descendre justqu'au siège 4. Les orifices 22 forment donc tranquilliseur, la pièce coulissante 3 et le siège 4 équivalent en raison de leurs dimensions d'ouverture aux soupapes de l'art antérieur, bien adaptées à passer de forts débits.

L'invention permet donc pour toutes les valeurs de réglage intermédiaires du débit de la turbine, de remplacer la levée partielle des soupapes connues par une levée quasiment totale d'une soupape intermédiaire de dimensions réduites et variables en fonction du débit. Par ailleurs, on remarquera que la levée totale de la tige de soupape est extrêmement importante sur toute la plage de réglage, ce qui facilite encore mieux la régulation. La soupape composite de l'invention permet en outre, du fait que par sa construction télescopique elle soit englobée dans une enveloppe nécessairement percée de trous pour permettre le passage de la vapeur, d'obtenir en même temps un tranquilliseur sur chacune des soupapes partielles, ce qui permet encore mieux d'obtenir la suppression des bruits et vibrations.

L'invention trouve son application la plus intéressante dans le domaine de la production d'énergie par turbomachines.

## Revendications

1. Soupape composite d'admission pour turbine à vapeur comportant plusieurs soupapes successives coaxiales actionnées par le soulèvement d'une tige de soupape (7), la surface d'admission de vapeur étant croissante d'une soupape à la suivante dans le sens de la levée de la tige de soupape, la première soupape, assurant une première entrée de vapeur (11—12), étant consituée par un premier clapet (11) porté par la tige (7) et par un premier siège (12) d'une pièce coulissante (2) disposée dans une portion cylindrique pourvue d'orifices latéraux (20) de passage de la vapeur, la pièce coulissante (2) comportant une section amont rétrécie permettant son soulèvement par le clapet (11), la partie aval de la pièce coulissante (2) formant clapet d'une seconde soupape assurant une seconde entrée de vapeur (14), les entrées (11—12, 14) s'ouvrant l'une après l'autre de l'amont vers l'aval au fur et à mesure de la levée de la tige de soupape, caractérisé en ce que la soupape peut comporter plus de deux entrées de vapeur (11—12, 14, 15), plusieurs pièces coulissantes (2, 3) étant montées télescopiquement l'une sur l'autre dans la portion cylindrique, celle-ci étant percée d'orifices (20, 21, 22) disposées respectivement à hauteur de chacune des entrées (11—12, 14, 15) de manière telle que les orifices (20, 21) soient obturés successivement, d'amont en aval, par lesdites pièces coulissantes (2, 3) en concordance avec l'ouverture de l'entrée suivante au fur et à mesure de la levée de la tige de soupape (7).

2. Soupape composite selon la revendication 1, caractérisée en ce que les entrées de vapeur (11—12, 14, 15) sont réparties le long d'une tuyère divergente, les sections intérieures des pièces coulissantes (2, 3) formant, en position de fermeture de la soupape, chacune des parties continues de la tuyère divergente.

## Claims

1. A compound inlet valve for a steam turbine, including a number of valves in coaxial succession, actuated by the lifting of a valve stem (7), the steam inlet area increasing from one valve to the next in the direction of lift of the valve stem, the first valve which ensures a first steam inlet (11—12) consisting of a first valve-disc (11) carried by the stem (7) and of a first seating (12) on a slider piece (2) arranged in a cylindrical portion provided with lateral orifices (20) for the steam flow, the slider piece (2) having a necked upstream area enabling raising of it by the valve-disc (11), the downstream portion of the slider piece (2) forming the valve-disc of a second valve which ensures a second stream inlet (14), the inlets (11—12, 14) opening one after another from upstream towards downstream in proportion as the valve stem lifts, characterized in that the valve may include more than two steam inlets (11—12, 14, 15), a number of slider pieces (2, 3,) being mounted telescopically over one another in the cylindrical portion, the latter being pierced with orifices (20, 21, 22) arranged respectively at the height of each of the inlets (11—12, 14, 15) in such a way that the orifices (20, 21) are shut off in succession from upstream to downstream by the said slider pieces (2, 3) in conformity with the opening of the next inlet in proportion as the valve stem (7) lifts.

2. A compound valve as in Claim 1, characterized in that the steam inlets (1x—12, 14, 15) are distributed along a divergent nozzle, the internal areas of the slider pieces (2, 3) each forming in the position of closure of the valve, one of the continuous portions of the divergent nozzle.

## Patentansprüche

1. Verbundeinlassventil für Dampfturbine mit mehreren aufeinanderfolgenden koaxialen Ventilen, die durch Heben einer Ventilspindel (7) betätigt werden, wobei die Dampfeinlassfläche von einem Ventil zum anderen in Heberichtung der Ventilspindel zunimmt, das erste Ventil, das einem ersten Dampfeintritt (11—12) gewährleistet, aus einer ersten von der Spindel (7) getragenen Klappe (11) und aus einem ersten Sitz (12) eines in einem mit seitlichen Dampfeinlassöffnungen (20) versehen zylindrischen Abschnitt angeordneten Gleitstücks (2) besteht, wobei das Gleitstück (2) vor dem Ventil einen verengten Querschnitt aufweist, der sein Anheben durch die Klappe (11) gestattet, der nach dem Ventil angeordnete Teil des Gleitstücks (2) die Klappe eines zweiten Ventils bildet, das einen zweiten Dampfeinlass (14) gewährleistet, die Einlassöffnungen (11—12, 14) sich in gleichem Masse, wie sich die Ventilspindel hebt, nacheinander öffnen, zuerst vor dem Ventil dann nach dem Ventil, dadurch gekennzeichnet, dass das Ventil mehr als zwei Dampfeinlassöffnungen (11—12, 14, 15) aufweisen kann, wobei mehrere Gleitstückte (2, 3) teleskopisch im zylindrischen Abschnitt montiert sind, der jeweils auf Höhne eines jeden Einlasses (11—12, 14, 15) mit Öffnungen (20, 21, 22) versehen ist, so dass die Öffnungen (20, 21) nacheinander, zunächst vor dem Ventil, dann nach dem Ventil, durch die genannten Gleitstücke (2, 3) in Übereinstimmung der Öffnung des folgenden Einlasses in gleichem Masse geschlossen werden, wie sich die Ventilsindel (7) hebt.

2. Verbundventil nach Anspruch 1 dadurch gekennzeichnet, dass die Dampfeinlässe (11—12, 14, 15) entlang einer auseinandergehenden Düse verteilt sind, wobei die inneren Querschnitte der Gleitstücke (2, 3) in Ventilschliess-Stellung jeweils eines der kontinuierlichen Teile der auseinandergehenden Düse bilden.

FIG .1

FIG . 2

FIG. 3

FIG. 4